# EUROPÄISCHE PATENTSCHRIFT

(11) **EP 1 231 390 B1**
(45) Veröffentlichungstag und Bekanntmachung des Hinweises auf die Patenterteilung: **22.12.2004**
(21) Anmeldenummer: 02002213.3
(22) Anmeldetag: 30.01.2002
(51) Int. Cl.: F16B 41/00, F16B 35/04

(54) **Verbindungselement mit einer Schraube und einem daran unverlierbar angeordneten Stützelement**
Fastening means with a screw and a support captive thereon
Elément de fixation comprenant une vis et un élément de support monté imperdable dessus

(30) Priorität: 08.02.2001 DE 10106093
(43) Veröffentlichungstag der Anmeldung: 14.08.2002
(73) Patentinhaber: Kamax-Werke Rudolf Kellermann GmbH & Co. KG, 37520 Osterode am Harz (DE)
(72) Erfinder: Braun, Mario, Dipl.-Ing., 35325 Mücke (DE); Sommer, Wolfgang, Dipl.-Ing., 35285 Gemünden/Wohra (DE)
(74) Vertreter: Patentanwälte Rehberg + Hüppe

(56) Entgegenhaltungen:
- DE-A- 19 924 502
- GB-A- 881 155
- US-A- 3 138 188
- US-A- 5 244 325
- US-A- 5 711 711

## Beschreibung

Die Erfindung betrifft ein Verbindungselement mit einer Schraube und einem daran unverlierbar und in der Regel drehbar angeordneten Stützelement, wie Hülse, Unterlegscheibe o. dgl., wobei die Schraube einen Kopf und einen Schaft, auf dem endseitig ein Gewindeabschnitt mit einem kopfseitigen Gewindeauslauf und kopfseitig ein Schaftabschnitt mit einem gegenüber dem Außendurchmesser des Gewindeabschnitts reduziertem Durchmesser angeordnet sind, und das Stützelement eine Engstelle mit kleinerem Durchmesser als der Außendurchmesser des Gewindeabschnitts aufweist. Solche Verbindungselemente aus mindestens zwei Teilen, die unverlierbar aneinander gehalten sind, werden in der Serie erstellt, um einen hohen Vorfertigungsgrad zu erzielen und damit letztlich die Montage mit Hilfe des jeweiligen Verbindungselementes einfacher und schneller gestalten zu können. Die Schraube besteht in aller Regel aus Metall, ebenso auch das Stützelement. Die Erfindung lässt sich aber auch bei Sonderausführungen anwenden, bei denen zumindest eines der Elemente beispielsweise aus Kunststoff ausgebildet sein kann.

Ein Verbindungselement der eingangs beschriebenen Art ist aus der DE 199 24 502 A1 bekannt. Das eine Element des Verbindungselementes ist eine Schraube, die einen Kopf mit einer Kopfauflagefläche und einen Schaft aufweist. Der Schaft ist in einen zylindrischen Schaftabschnitt und einen mit Gewinde versehenen Gewindeabschnitt unterteilt, wobei der Schaftabschnitt kopfseitig, also dem Kopf bzw. der Auflagefläche des Kopfes der Schraube zugekehrt, angeordnet ist, während der Gewindeabschnitt mehr oder weniger am freien Ende des Schaftes der Schraube angeordnet ist. Selbstverständlich kann der Gewindeabschnitt auch in einem Mittelbereich angeordnet sein, wenn die Schraube endseitig z. B. einen Zentrieransatz o. dgl. besitzt. Als Stützelement kann eine Hülse, eine Unterlegscheibe o. dgl. vorgesehen sein. Das Stützelement kann auch aus mehreren solcher Elemente zusammengesetzt sein. Auf jeden Fall besitzt das Stützelement eine Engstelle, die einen kleineren Durchmesser aufweist, als es dem Außendurchmesser des Gewindes des Gewindeabschnitts entspricht. Die Engstelle kann nun wiederum auf sehr verschiedene Weise realisiert werden, beispielsweise durch Einprägungen auf dem Umfang der Hülse oder durch einen nach innen vorstehenden umlaufenden Wulst. Auch die Einfügung zusätzlicher Elemente, beispielsweise in Form eines Sicherungsrings, in den Innendurchmesser der Hülse ist möglich. Bei Verwendung einer Unterlegscheibe als Stützelement bildet die Bohrung der Unterlegscheibe die Engstelle, stellt also gleichsam eine umlaufende, nach innen vorspringende Wulst dar. Der Schaftabschnitt besitzt einen vergleichsweise reduzierten Durchmesser, also einen Durchmesser, der auf jeden Fall kleiner als der Außendurchmesser des Gewindes auf dem Gewindeabschnitt ausgebildet ist. Dieser reduzierte Durchmesser des Schaftabschnitts kann dem Rolldurchmesser der Schraube bei ihrer Herstellung entsprechen.

Wenn ein Gewinde auf den Schaft einer Schraube aufgebracht, insbesondere aufgerollt wird, so ist dies nur möglich unter gleichzeitiger Erzeugung eines kopfseitigen Gewindeauslaufs. Im Bereich dieses kopfseitigen Gewindeauslaufs vergrößert sich der Durchmesser des oder der Gewindegänge z. B. von dem Rolldurchmesser bis auf den Außendurchmesser des Gewindes im Gewindeabschnitt, welches unmittelbar an diesen Auslauf anschließt. Die Normung für den Gewindeauslauf unterscheidet zwischen einem Regelfall und einer so genannten kurzen Ausbildung. Im Regelfall erstreckt sich der Gewindegang mit sich veränderndem Außendurchmesser über 2,5 Umdrehungen der Schraube, also um 900°. Die kurze Ausbildung eines Gewindeauslaufs sieht hierfür 1,25 Umdrehungen, also 450°, vor. Noch kürzere Gewindeausläufe sind zwar denkbar, lassen sich aber wegen vergleichsweise reduzierter Standzeiten der Gewindewalzwerkzeuge nicht wirtschaftlich herstellen. Im Bereich jedes Gewindeauslaufes - Regelfall oder kurze Ausbildung - ergibt sich an der Schraube ein (konischer) Hüllkegel, mit dem das Stützelement mit seiner Engstelle in Kontakt kommen kann. Stellt man sich die Abwicklung des Gewindegangs des Gewindeauslaufs vor, so ergibt sich eine sehr lange schiefe Ebene mit langsam zunehmender Steigung. Dieser Hüllkegel bzw. diese schiefe Ebene führen dazu, dass das Stützelement im Bereich des Gewindeauslaufs verklemmen kann. Verbindungselemente der in Rede stehenden Art werden insbesondere als Schüttware an Montagestationen eingesetzt. Der Montagestation ist dabei in der Regel eine automatische Zuführungs- bzw. Förderstation vorgeschaltet, die die Verbindungselemente z. B. unter achsweiser Ausrichtung in eine Reihe hintereinander bringt. Solche Fördereinrichtungen arbeiten häufig mit Vibrationsantrieben. Dabei besteht die Gefahr, dass das Stützelement auf der Schraube so festgerüttelt wird, dass das Verbindungselement in der Montagestation nicht mehr montiert werden kann. Aber auch dann, wenn solche Verbindungselemente einzeln ihrer bestimmungsgemäßen Verwendung zugeführt werden, besteht während des Transportes der Verbindungselemente als Schüttgut ebenfalls die Gefahr, dass zumindest bei einigen der Verbindungselemente das Stützelement im Bereich des Gewindeauslaufs einen klemmenden Sitz an der Schraube erhält. Diese Nachteile treten nicht nur dann auf, wenn die Engstellen an den Stützelementen örtlich als Einprägungen über den Umfang vorgesehen sind, sondern auch dann, wenn die Engstellen über den Umfang durchlaufend ausgebildet sind. Bei örtlichen Einprägungen besteht die weitere Gefahr, dass diese Einprägungen in der verklemmten Stellung genau dort festgerüttelt werden, wo sie zwischen zwei benachbarten Gewindegangabschnitten im Bereich des kopfseitigen Gewindeauslaufs eingreifen.

Der Erfindung liegt die Aufgabe zugrunde, ein zumindest zweiteiliges Verbindungselement aus Schraube und Stützelement zu schaffen, bei dem das Stützelement unverlierbar an der Schraube gehalten ist und welches insbesondere bei automatischer Förderung der Verbindungselemente eine deutlich verringerte Neigung zum Festklemmen zeigt.

Erfindungsgemäß wird dies bei einem Verbindungselement der eingangs beschriebenen Art dadurch erreicht, dass der kopfseitige Gewindeauslauf zumindest teilweise über seine axiale Erstreckung und zumindest über einen wesentlichen Teil seines Umfangs entfernt ist, so dass ein sprung- oder stufenartiger Anstieg zumindest etwa auf den Außendurchmesser des Gewindeabschnitts resultiert.

Die Erfindung geht von dem Gedanken aus, den bei der Herstellung eines Gewindes im Bereich eines Gewindeabschnitts zwangsläufig anfallenden kopfseitigen Gewindeauslauf ganz oder teilweise wieder zu entfernen und damit den (konischen) Hüllkegel in diesem Bereich zu beseitigen bzw. in einen Hüllzylinder umzuformen. Es soll ein Sprung oder eine Stufe am kopfseitigen Beginn des Gewindeabschnittes erzeugt werden, die als axialer und ggfs. auch tangentialer Anschlag für die Engstelle an dem Stützelement dient. Im Bereich dieses sprung- oder stufenartigen Anstiegs lässt sich zwar auch eine Durchmesservergrößerung in tangentialer Richtung nicht vermeiden. Der Anstieg findet jedoch wesentlich komprimierter - also auf vergleichsweise kürzerer Strecke - statt als im Stand der Technik. Beispielsweise erstreckt sich dieser Anstieg im Außendurchmesser des Gewindegangs oder an der Verschneidungsfläche mit der Flanke des Gewindegangs nur auf den Bruchteil einer Umdrehung der Schraube. Damit wird gleichsam ein axial und tangential wirkender abrupter Übergang zwischen dem Schaftabschnitt und dem Gewindeabschnitt geschaffen und so die Neigung zum Festklemmen des Stützelementes an der Schraube deutlich reduziert bzw. sogar beseitigt. Dies gilt insbesondere dann, wenn das Stützelement an der Schraube drehbar gehalten ist. Das Entfernen des Gewindeauslaufs kann ganz oder teilweise geschehen, und zwar durch eine spanende oder eine spanlose Bearbeitung. Besonders einfach kann hier ein Rolloder Walzvorgang eingesetzt werden, mit dem der Außendurchmesser des Gewindeauslaufs reduziert, insbesondere plattgewalzt, wird. In der Regel verbleiben dabei Reste des Gewindeauslaufs an der Schraube, die aber zumindest annäherungsweise von dem Hüllzylinder umschlossen werden, der bei Bewegungen des Stützelementes relativ zur Schraube jedoch zu keiner Verklemmung führen kann.

Besonders sinnvoll ist es, wenn die Schraube im Bereich des entfernten kopfseitigen Gewindeauslaufs einen genau axial zylindrisch verlaufenden Hülldurchmesser aufweist. Es ist aber durchaus nicht schädlich, wenn die Formgebung in einem geringfügig kegelig verlaufenden Hülldurchmesser endet, da über die axiale Länge des Gewindeauslaufs gesehen unterschiedliche Massenmengen herabgewalzt werden müssen. Wichtig ist es dabei nur, die Gestaltung so vorzunehmen, dass kein Klemmkontakt an dieser Stelle zu den Engstellen oder der Engstelle des Stützelementes entsteht. Der kopfseitige Gewindeanfang des Gewindeabschnitts erhält dadurch vielmehr eine sich im wesentlichen radial erstrekkende und axial wirkende Anlagefläche in Form einer Stufe, die sich freilich nur über einen Teil des Umfangs erstreckt. Auch in tangentialer Richtung ist eine Art Stufe verwirklicht. Dies ist aber in Verbindung mit der Ausbildung des Stützelementes ansonsten nicht schädlich. Insbesondere ist es sinnvoll, wenn der Hülldurchmesser oder Hüllzylinder nennenswert kleiner als der Durchmesser der Engstelle ausgebildet ist. Es ist hier sinnvoll, ein etwas größeres Spiel vorzusehen, um eine Klemmneigung sicher zu beseitigen. Andererseits sollte der Hülldurchmesser größer, insbesondere jedoch nur geringfügig größer, als der reduzierte Durchmesser des Schaftabschnitts ausgebildet sein. Es gilt hier eine möglichst große oder abrupte Stufe am Beginn des verbleibenden Gewindes des Gewindeabschnitts zu gestalten. Am sinnvollsten ist es natürlich, wenn diese Stufe genau an der Stelle erzeugt wird, an der der Gewindeauslauf in den Gewindeabschnitt übergeht. Die Stufe kann auch im Anfangsbereich des Gewindeabschnittes angeordnet sein. Schließlich ist es möglich, die Stufe auch noch im eigentlichen Gewindeauslauf zu plazieren, so dass die Stufe selbst auf einem etwas kleineren Außendurchmesser endet, als es dem Außendurchmesser des Gewindes des Gewindeabschnittes entspricht. In allen Fällen zielt die Erfindung jedoch darauf ab, diesen sich radial über einen Teil des Umfangs erstreckenden und axial mit der Engstelle des Stützelementes zusammenwirkenden Anschlag zu schaffen.

Besonders sinnvoll ist es, wenn an der Schraube der sprung- oder stufenartige Anstieg des Hülldurchmessers im Bereich des entfernten kopfseitigen Gewindeauslaufs auf den Außendurchmesser des Gewindeabschnitts auf weniger als 180°, insbesondere etwa 90°, des Umfangs verlaufend angeordnet ist. Wenn der sprungoder stufenartige Anstieg radial, also rechtwinklig zur Achse der Schraube, ausgebildet ist, ergibt sich eine Verschnittfläche des Hüllzylinders mit dem betreffenden Gewindegang auf etwa 90° des Umfangs. Nur in diesem Bereich bleibt der Gewindegang des Gewindeauslaufs oder des Gewindes stehen, und es ergibt sich hier in tangentialer Richtung der ansteigende und sich damit vergrößernde Außendurchmesser. Bei mehrgängigen Gewinden ergeben sich mehrere kleinere Verschneidungsflächen. In allen Fällen erstreckt sich der ansteigende stehenbleibende Gewindegang des Gewindeauslaufs aber über weniger als 180°.

Der kopfseitige Gewindeauslauf des Gewindeabschnitts der Schraube kann spanend oder spanlos entfernt bzw. bearbeitet sein. Besonders einfach ist es, den kopfseitigen Gewindeauslauf etwa auf den Rolldurchmesser des Schaftabschnittes herabzuwalzen. Da hier Massen verformt und verlagert werden müssen, kann dies, besonders bei sehr großer Umformung, insbesondere bei Umformung auf oder gar unterhalb des Rolldurchmessers eine Längung der Schraube zur Folge haben. Entstehende Schließfalten am Material wirken sich nicht nachteilig aus. Es können sogar Schließvertiefungen stehenbleiben. Auch diese sind ohne nachteiligen Einfluss. Bei spanender Entfernung, beispielsweise durch Drehen oder Schleifen, kann auch eine Reduzierung auf den Rolldurchmesser erfolgen. In spanloser Kaltumformung ist es sogar möglich, dass die Schraube im Bereich des entfernten kopfseitigen Gewindeauslaufs eine durch Walzen gebildete etwa umlaufende Wulst aufweist. In diesem Falle bildet diese aufgewalzte oder beim Walzen ausgesparte Wulst den Gegenanschlag für die Engstelle des Stützelementes und damit den sprung- oder stufenartigen Anstieg, der jetzt deutlich im Bereich des Gewindeauslaufs und nicht an seinem Ende angeordnet ist. Die beabsichtigte Wirkung ist jedoch vergleichbar. Die etwa umlaufende Wulst kann auch durch eine spanende Bearbeitung entstehen.

Das als Hülse ausgebildete Stützelement kann einen Innendurchmesser aufweisen, der größer als der Außendurchmesser des Gewindeabschnitts ausgebildet ist. An der Hülse sind dann mehr örtliche Einprägungen über den Umfang verteilt vorgesehen als es der Gangzahl des Gewindes entspricht. Die Anzahl der örtlichen Einprägungen sollte bei gleichmäßiger Verteilung am Umfang größer als die Gangzahl des Gewindes sein, damit mindestens eine der Einprägungen in jeder Relativlage zwischen Stützelement und Schraube an dem sprung- oder stufenartigen Anschlag anliegt. Bei Erstreckung des sprung- oder stufenartigen Anstiegs über etwa 90° des Umfangs sollten mindestens fünf örtliche Einprägungen über den Umfang verteilt vorgesehen sein. Wenn sich der sprungoder stufenartige Anstieg über etwa 180° des Umfangs erstreckt, sollten mindestens drei örtliche Einprägungen über den Umfang verteilt angeordnet sein, damit in allen Relativlagen mindestens eine der Einprägungen an dem sprung- oder stufenartigen Anschlag anliegt.

Bei Ausbildung des Stützelementes als Unterlegscheibe kann das als Unterlegscheibe ausgebildete Stützelement einen Innendurchmesser aufweisen, der kleiner als der Außendurchmesser des Gewindeabschnitts ausgebildet ist und die Engstelle bildet. Die gesonderte Anordnung von Einprägungen oder sonstigen Gegenanschlagselementen ist hier entbehrlich.

Für die Anordnung des sprung- oder stufenartigen Anstiegs gibt es verschiedene Möglichkeiten. Sinnvoll ist es, die gewünschte Stufe voll auszubilden, also die Gestaltung so vorzunehmen, dass der sprung- oder stufenartiger Anstieg des Hülldurchmessers auf den Außendurchmesser des Gewindeabschnitts im Bereich des Gewindeabschnitts angeordnet ist. Der stufenartige Anstieg kann auch genau an der Übergangsstelle zwischen Gewindeauslauf und Gewinde des Gewindeabschnittes plaziert sein. Selbst eine vergleichsweise kürzere axiale Entfernung des Gewindeauslaufs ist möglich.

Die Erfindung wird anhand verschiedener Ausführungsbeispiele weiter im Detail erläutert und verdeutlicht. Es zeigen:
- Fig. 1: eine erste Ausführungsform des Verbindungselementes in Seitenansicht, teilweise geschnitten,
- Fig. 2: die vergrößerte Darstellung eines herkömmlichen Gewindeauslaufes in Form eines Halbschnittes (Stand der Technik),
- Fig. 3: die vergrößerte Darstellung des erfindungsgemäß umgeformten Gewindeauslaufs im Vergleich zu Fig. 2,
- Fig. 4: eine weitere Ausführungsform des Gewindeauslaufs im Halbschnitt,
- Fig. 5: eine weitere Ausführungsform des Gewindeauslaufs im Halbschnitt,
- Fig. 6: eine weitere Ausführungsform des Gewindeauslaufs im Halbschnitt,
- Fig. 7: eine weitere Ausführungsform des Gewindeauslaufs im Halbschnitt,
- Fig. 8: die Darstellung einer Schraube mit herkömmlichem Gewindeauslauf im Halbschnitt mit Zuordnung eines Diagramms, welches die Durchmesserveränderung über die Länge der Schraube darstellt,
- Fig. 9: die Darstellung einer Schraube mit erfindungsgemäßem Gewindeauslauf im Halbschnitt mit Zuordnung eines Diagramms, welches die Durchmesserveränderung über die Länge der Schraube darstellt,
- Fig. 10: ein Diagramm des Durchmesserzuwachses des Gewindeauslaufs in Abwicklung, also in tangentialer Richtung der Schraubenlinie folgend,
- Fig. 11: eine weitere Ausführungsform des Verbindungselementes in Seitenansicht, und
- Fig. 12: eine weitere Ausführungsform des Verbindungselementes in Seitenansicht.

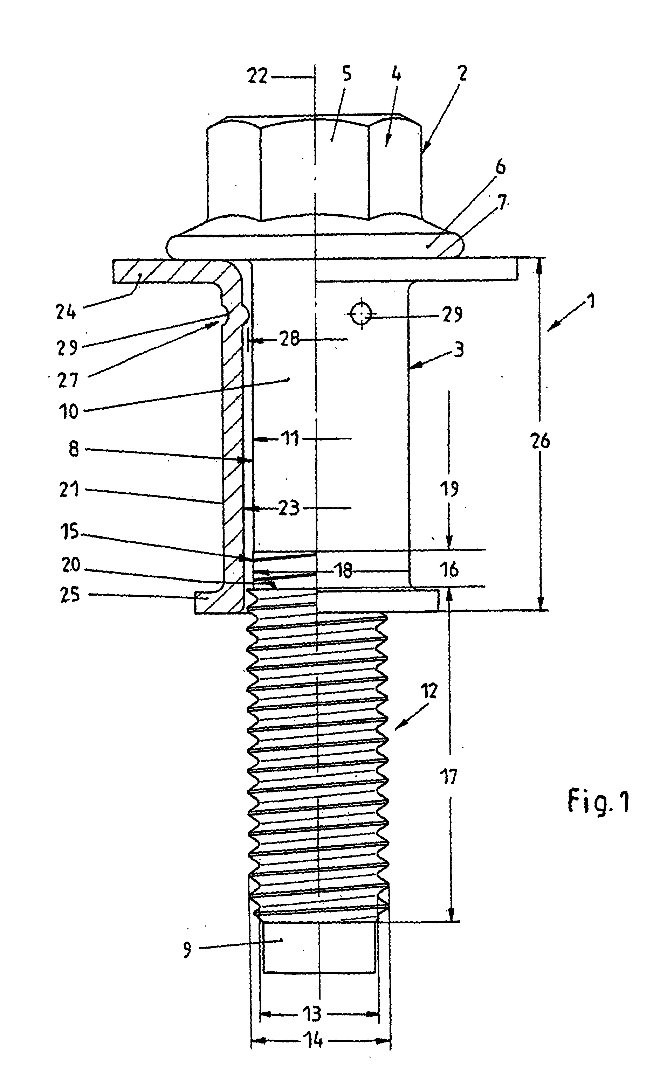

In Fig. 1 ist eine erste Ausführungsform des Verbindungselementes 1 dargestellt. Das Verbindungselement 1 ist mindestens zweiteilig ausgebildet und weist als wesentliche Bestandteile eine Schraube 2 und ein Stützelement 3 auf.

Die Schraube 2 ist hier als Bundschraube ausgebildet. Sie besitzt einen Kopf 4 mit einer unrunden Angriffsfläche 5 für ein Verdrehwerkzeug, einen Bund 6, der eine Anlagefläche 7 aufweist, die zur Übertragung einer Axialkraft dient. Im Anschluss an den Kopf 4 bzw. dessen Anlagefläche 7 erstreckt sich ein Schaft 8 bis zum freien Ende 9 der Schraube. Der Schaft 8 kann im Bereich des freien Endes 9 in einen Zentrieransatz übergehen. Der Schaft 8 weist kopfseitig einen Schaftabschnitt 10 auf, der einen im Vergleich zu dem noch zu beschreibenden Gewinde reduzierten Durchmesser 11 besitzt. Endseitig oder dem freien Ende 9 der Schraube 2 zugekehrt weist der Schaft 8 einen Gewindeabschnitt 12 auf. Das Gewinde des Gewindeabschnittes 12 besitzt einen Kerndurchmesser 13 und einen Außendurchmesser 14. Zwischen dem Schaftabschnitt 10 mit dem im Vergleich zum Außendurchmesser 14 des Gewindeabschnitts 12 reduzierten Durchmesser 11 und dem Gewindeabschnitt 12 erstreckt sich ein kopfseitiger Gewindeauslauf 15. Der Gewindeauslauf 15 erstreckt sich in Längsrichtung der Schraube 2 über eine Länge 16, während der Gewindeabschnitt 12 einschließlich eines dem freien Ende 9 zugekehrten Gewindeauslaufs eine Länge 17 aufweist. Aus Fig. 1 ist bereits erkennbar, dass der Gewindeauslauf 15 einen Hülldurchmesser 18 aufweist. Während Gewindeausläufe nach dem Stand der Technik an dieser Stelle konisch verlaufen, also einen Hüllkegel besitzen, ist hier ein zumindest angenähert zylindrisch verlaufender Gewindeauslauf 15 geformt, der einen zumindest etwa über die Länge 16 konstanten Hülldurchmesser 18 aufweist. Der Hülldurchmesser 18 liegt in der Größenordnung des reduzierten Durchmessers 11 des Schaftabschnittes 10, kann diesen aber auch geringfügig über- oder unterschreiten. Der Schaftabschnitt 10 erstreckt sich über eine Länge 19, die an der Anlagefläche 7 des Kopfes 4 der Schraube 2 beginnt und an dem Beginn des kopfseitigen Gewindeauslaufs 15 endet. Auf diese Weise ist ein sprung- bzw. stufenartiger Anstieg 20 des Durchmessers (Außendurchmesser) am Übergang des Endes des kopfseitigen Gewindeauslaufs 15 zu dem Außendurchmesser 14 des Gewindeabschnitts 12 gebildet.

Das in Fig. 1 dargestellte Stützelement 3 ist als Hülse 21 ausgebildet und besitzt eine etwa hohlzylindrisch zu der Achse 22 der Schraube 2 verlaufende Gestalt mit einem Innendurchmesser 23. Der Innendurchmesser 23 ist hier größer als der Außendurchmesser 14 des Gewindeabschnitts 12, so dass die Hülse 21 nach der Formgebung des Gewindes am Gewindeabschnitt 12 auf die Schraube 2 bzw. deren Schaft 8 aufgeschoben werden kann. Die Hülse 21 kann endseitig mit sich radial erstreckenden Flanschen 24 und 25 versehen sein. Die Hülse 21 besitzt eine Länge 26, mit der sie sich in axialer Richtung, also parallel zur Achse 22, erstreckt. Die Länge 26 ist in der Regel größer als die Summe aus den Längen 16 und 19, so dass die Hülse 21 im Bereich des Gewindeauslaufs 15 endet. Die Länge 26 kann aber auch vergleichsweise kürzer ausgebildet sein, wenn eine Überschraubung des Gewindeabschnitts 12 möglich oder vorgesehen ist. Durch die Durchmesserabstimmung ist die Hülse 21 bzw. das Stützelement 3 relativ zur Schraube 2 verdrehbar. Das Stützelement 3 weist eine Engstelle 27 auf, die einen Durchmesser 28 besitzt oder bildet, der kleiner als der Außendurchmesser 14 des Gewindeabschnitts 12 bemessen ist. Die Engstelle 27 kann von mehreren Einprägungen 29 gebildet werden, die nach dem Rollen des Gewindes des Gewindeabschnitts 12 und dem Aufstecken der Hülse 21 auf die Schraube 2 aufgebracht werden. Die Engstelle 27 kann aber auch auf andere Weise gebildet werden, beispielsweise durch eine umlaufende, nach innen vorspringende Wulst, durch einen eingesetzten Sicherungsring o. dgl..

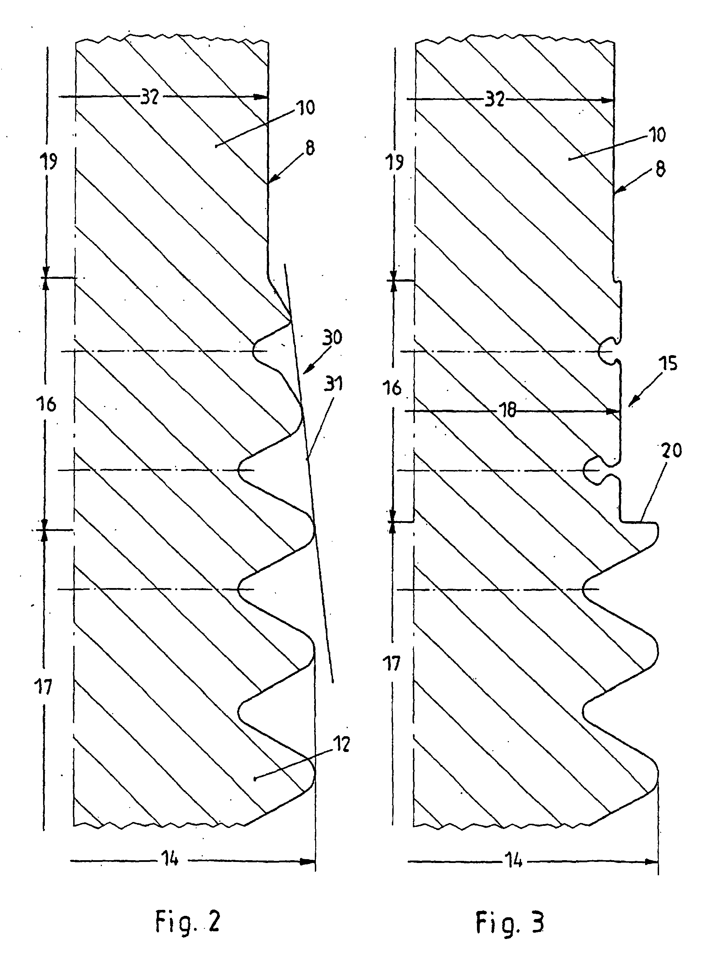

Die Besonderheit der Erfindung liegt im Bereich des kopfseitigen Gewindeauslaufs 15, insbesondere in dessen abweichender Gestaltung zum Stand der Technik. Um dies zu verdeutlichen, wird auf die Fig. 2 und 3 hingewiesen. Fig. 2 zeigt anhand eines Halbschnittes einen vergrößerten Ausschnitt aus einer Schraube 2 mit einem konventionellen Gewindeauslauf 30, der sich über die Länge 16 erstreckt. Dieser konventionelle Gewindeauslauf 30 ist zwischen dem Schaftabschnitt 8 und dem Gewindeabschnitt 12 vorgesehen bzw. ausgebildet. Im Bereich dieses Gewindeauslaufs 30 läuft das Gewinde des Gewindeabschnitts 12 aus. Der Außendurchmesser wird von einem Hüllkegel 31 begrenzt. Der Durchmesser des Gewindeauslaufs 30 steigt über die Länge 16 an. Er beginnt z. B. mit dem Rolldurchmesser 32 und endet in dem Außendurchmesser 14 des Gewindeabschnitts 12. Die Länge 16 beträgt im Regelfall 2,5 Umdrehungen des entsprechenden Gewindegangs, in der kurzen Ausbildung 1,25 Umdrehungen des Gewindegangs.

Im Vergleich zu Fig. 2 (Stand der Technik) ist in Fig. 3 die neue Ausbildung des Gewindeauslaufs 15 dargestellt. Auch hier erstreckt sich der Gewindeauslauf 15 über die Länge 16. Der Gewindeauslauf 15 kann zunächst einmal normal hergestellt sein, wie dies beim Stand der Technik (Fig. 2) üblich ist. Anschließend wird jedoch im Bereich des Gewindeauslaufs 15 der Hülldurchmesser 18 erzeugt, der sich als Zylinder über die Länge 16 erstreckt. Dies kann durch spanende oder spanlose Bearbeitung erfolgen. Fig. 3 zeigt ein Beispiel, bei dem der Hülldurchmesser 18 spanlos durch Herabwalzen erzeugt worden ist, so dass Teile der Gewindevertiefungen im Bereich des Gewindeauslaufs 15 noch sichtbar sind. Das dem Kopf der Schraube 2 abgekehrte Ende der Herstellung des Hülldurchmessers 18 kann genau mit dem Ende des Gewindeauslaufs 15 zusammenfallen, aber auch vorher oder nachher enden. Wichtig ist, dass am Ende des Hülldurchmessers 18 der sprung- oder stufenartige Anstieg 20 gebildet wird, der also noch im Bereich des Gewindeauslaufs 15, oder aber auch bereits innerhalb des Gewindeabschnitts 12 liegen kann, wenn er nicht genau an der Übergangsstelle plaziert ist. Der Hülldurchmesser 18 unterscheidet sich nur geringfügig von dem Rolldurchmesser 32. Im vorliegenden Falle ist der Hülldurchmesser 18 etwas größer gestaltet als der Rolldurchmesser 32. Der Hülldurchmesser 18 unterscheidet sich allerdings wesentlich von dem Außendurchmesser 14 des Gewindeabschnitts 12, damit der Anstieg 20 in radialer Richtung möglichst groß gestaltet ist. Dieser Anstieg 20 bildet einen Anschlag, mit dem die Engstelle 27 des Stützelementes 3 zusammenarbeitet und einerseits die Unverlierbarkeit des Stützelementes an der Schraube 2 sicherstellt und andererseits ein Festklemmen der Teile aneinander verhindert.

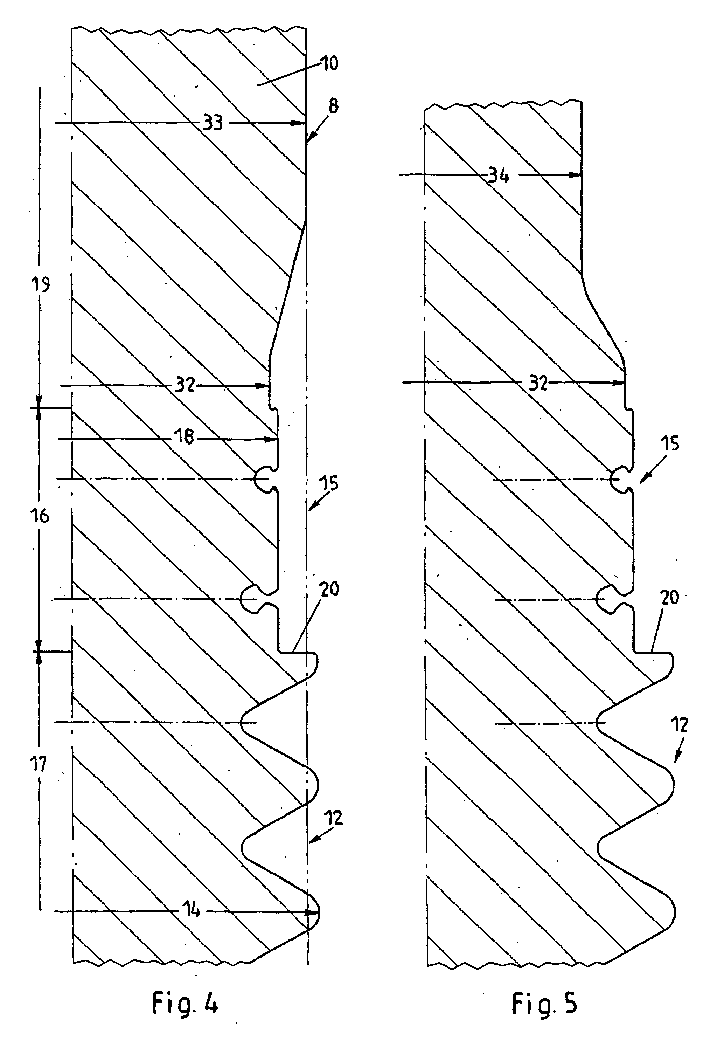

In den Fig. 4 bis 7 sind weitere Ausführungsmöglichkeiten für den erfindungsgemäß umgeformten Gewindeauslauf 15 dargestellt. Fig. 4 zeigt eine Ausführungsform, bei der der Schaftabschnitt 10 des Schaftes 8 einen Durchmesser 33 aufweist, der größer als der Rolldurchmesser 32 bemessen ist. Der Durchmesser 33 ist geringfügig kleiner als der Außendurchmesser 14 des Gewindeabschnitts 12. Auch diese Ausführungsvariante kann durch Kaltumformung, beispielsweise durch Rollen, hergestellt werden, aber auch durch eine spanende Bearbeitung in mehreren Schritten.

Die Ausführungsform gemäß Fig. 5 verdeutlicht, dass die Verhältnisse auch umgekehrt sein können als in Fig. 4 dargestellt. Der Durchmesser 34 ist hier kleiner als der Rolldurchmesser 32 ausgebildet. Der Gewindeauslauf 15 ist hier wieder spanend oder spanlos umgeformt. Bei den bisher beschriebenen Ausführungsformen liegt der Anstieg 20 ziemlich genau am Übergang des Gewindeauslaufs 15 zu dem Gewinde des Gewindeabschnitts 12.

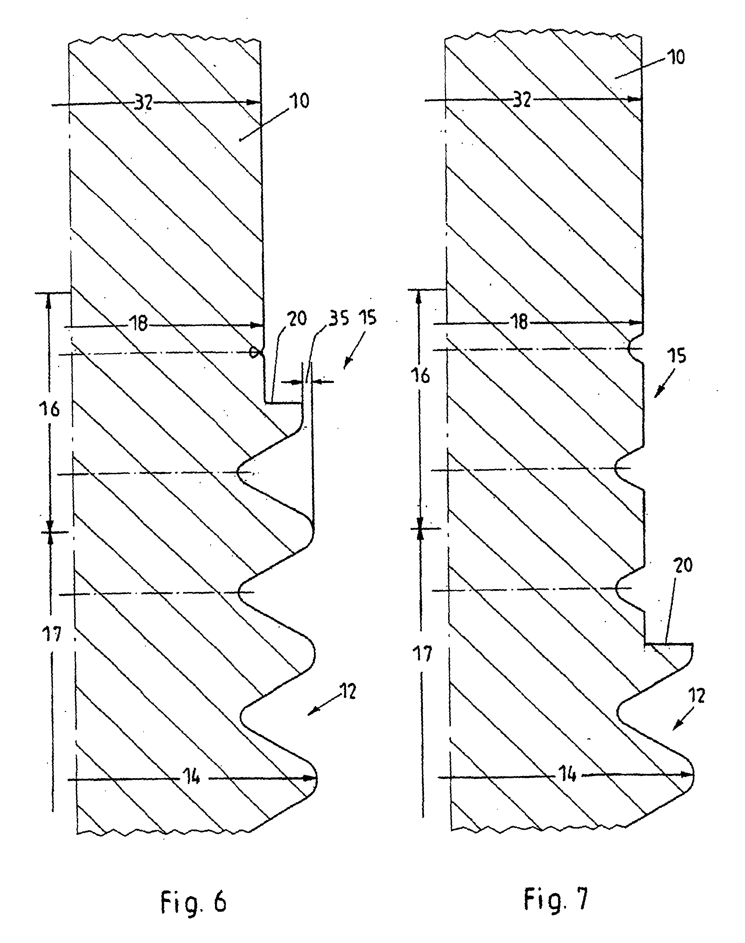

Fig. 6 zeigt eine Ausführungsform, bei der die Bearbeitung des Gewindeauslaufs 15 innerhalb der Länge 16 endet. Der Anstieg 20 ergibt sich damit in radial etwas verkürzter Form an einer Stelle des Gewindegangs des Gewindeauslaufs 15. Die radiale Erstreckung gegenüber dem Außendurchmesser 14 des Gewindeabschnitts 12 ist hier um ein Maß 35 geringer. Trotzdem reicht auch hier der Anstieg 20 aus, insbesondere dann, wenn der Hülldurchmesser 18 genau gleich dem Rolldurchmesser 32 oder etwa gleich gewählt wird.

Fig. 7 verdeutlicht, dass die axiale Erstreckung der Nachbearbeitung des Gewindeauslaufs 15 auch so ausgeführt werden kann, dass der Anstieg 20 im Bereich der Länge 17 des Gewindes des Gewindeabschnitts 12 liegt, also außerhalb der Länge 16 des eigentlichen Gewindeauslaufs 15. Dabei erstreckt sich dann der Anstieg 20 zwangsläufig bis auf den Außendurchmesser 14 des Gewindes des Gewindeabschnitts 12, und die radiale Erstreckung des Anstiegs 20 ist insoweit maximal. Dies wird auch erreicht, wenn der Anstieg 20 genau am Übergang zwischen den Längen 16 und 17 plaziert wird. Die anhand der Fig. 6 und 7 verdeutlichten Varianten sind bei sämtlichen Ausführungsformen möglich, sei es bei spanender (Fig. 7) oder bei spanloser (Fig. 6) Bearbeitung im Bereich des Gewindeauslaufs 15.

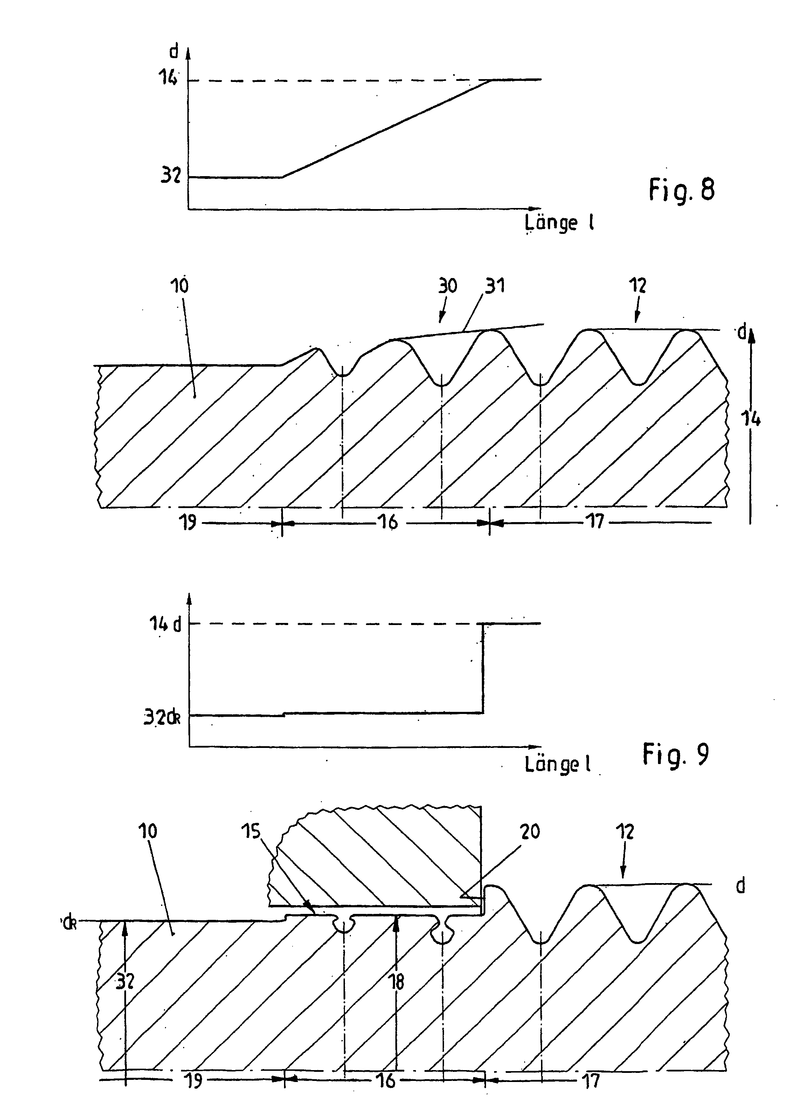

Fig. 8 zeigt mit der Darstellung ähnlich der Fig. 2 die Schraube 2 in einem Halbschnitt gemäß dem Stand der Technik sowie in einem zugehörigen Diagramm den Verlauf des Durchmessers ausgehend von dem Rolldurchmesser 32 im Bereich des Schaftabschnittes 10 mit dem Verlauf des Durchmessers im Bereich des Gewindeauslaufs 30 bis hin zum Außendurchmesser 14 im Gewindeabschnitt 12. Es ist erkennbar, wie der Durchmesser im Bereich des Gewindeauslaufs 30 über die Länge 16 entsprechend dem dort gebildeten Hüllkegel 31 ansteigt.

Fig. 9 zeigt den prinzipiellen Vergleich der erfindungsgemäßen Gestaltung des Gewindeauslaufs 15 mit seinem Anstieg 20. Ausgehend von einem Schaftabschnitt 10, der Rolldurchmesser 32 aufweisen kann, liegt der Hülldurchmesser 18 im Gewindeauslauf 15 geringfügig höher und geht dann über die Länge 1 der Schraube am Anstieg 20 sprunghaft in den Außendurchmesser 14 über. Der Vergleich der Fig. 8 und 9 bezieht sich auf eine Betrachtung in Längsrichtung der Schraube 2.

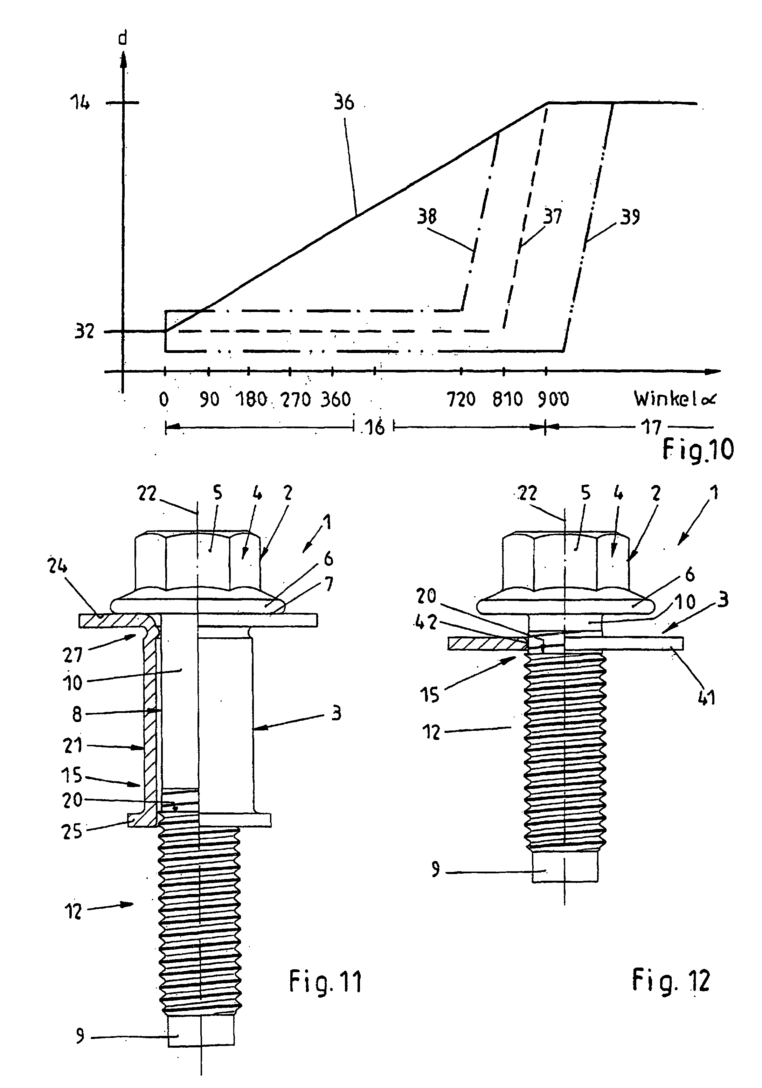

Fig. 10 verdeutlicht die Verhältnisse schematisch in der Abwicklung des Umfangs der Schraube 2, also in tangentialer Richtung entlang der Schraubenlinie des Gewindes. Zu diesem Zweck ist der Durchmesser über dem Winkel α über den Umfang der Schraube dargestellt. Die durchgezogene Linie 36 verdeutlicht den Stand der Technik, d. h. eine Schraube mit einem Gewindeauslauf 30 in Regelfallausbildung. Es ist erkennbar, dass die Spitze des Gewindegangs einen sich vergrößernden Durchmesser zeigt, der sich über insgesamt 900° erstreckt. Die Linie 36 bildet eine sehr flache schiefe Ebene, entlang der im Stand der Technik, insbesondere bei Anwendung einzelner Einprägungen 29, die Gefahr besteht, dass die nach innen gerichtete Spitze einer Einprägung 29 sich zwischen zwei Gewindegängen des Gewindeauslaufs 30 festklemmt oder durch Aufgleiten auf den Gewindespitzen verklemmt. Die gestrichelt dargestellte Linie 37 zeigt den Verlauf eines erfindungsgemäß gestalteten Gewindeauslaufs 15, der mit seinem Hülldurchmesser 18 zunächst den Rolldurchmesser 32 im Bereich des Gewindeauslaufs 15 beibehält und bei dem der Anstieg 20 am Übergang zwischen dem Gewindeauslauf 15 und dem Gewinde des Gewindeabschnitts 12 angeordnet ist. Der relativ steile Anstieg des Außendurchmessers verläuft hier über einen Winkel von 90°. Die strichpunktierte Linie 38 verdeutlicht eine Variante nach der Erfindung, bei der der Hülldurchmesser 18 zunächst geringfügig größer als der Rolldurchmesser 32 ist und sich über den größten Teil der Länge 16 des Gewindeauslaufs 15 erstreckt. Der Anstieg 20 ist hier im Bereich der Länge 16 angesiedelt. Der steile Anstieg erstreckt sich auch hier auf einen Bereich von etwa 90°. Die doppelt gepunktete Linie 39 verdeutlicht, dass der Hülldurchmesser 18 den Rolldurchmesser 32 auch unterschreiten kann und dass die Möglichkeit besteht, den Anstieg 20 in den Bereich des Gewindes des Gewindeabschnitts 12 zu legen, also letztlich außerhalb des eigentlichen Gewindeauslaufs 15.

Fig. 11 verdeutlicht eine Ausführungsform des Verbindungselementes 1 ähnlich der Ausführungsform gemäß Fig. 1. Das Stützelement 3 ist hier wiederum als Hülse 21 ausgebildet. Die Engstelle 27 wird hier von einer unendlich großen Anzahl von Einprägungen 29 gebildet, also einer nach innen verformten Wulst 40. Der Gewindeauslauf 15 kann hier so ausgebildet sein, wie dies ansonsten an den verschiedensten Ausführungsformen erläutert worden ist.

Fig. 12 zeigt eine Ausführungsform, bei der das Stützelement 3 als Unterlegscheibe 41 ausgebildet ist, die einen Innendurchmesser 42 aufweist, der zugleich die Engstelle 27 bildet. Der Schaftabschnitt 10 ist hier vergleichsweise kurz ausgebildet und geht dann sofort in den Gewindeauslauf 15 über. Auch hier ist der Anstieg 20 verwirklicht, der mit dem Innendurchmesser 42 zusammenarbeitet. Es versteht sich, dass das Gewinde des Gewindeabschnitts 12 erst nach dem Aufstecken der Unterlegscheibe 41 hergestellt werden kann, ebenso die entsprechende Nachbearbeitung im Bereich des Gewindeauslaufs 15. Dies ist jedoch möglich, da die Unterlegscheibe 41 eine geringere Dicke aufweist als die Länge des Schaftabschnitts 10.

### BEZUGSZEICHENLISTE

- 1 -: Verbindungselement
- 2 -: Schraube
- 3 -: Stützelement
- 4 -: Kopf
- 5 -: Angriffsfläche
- 6 -: Bund
- 7 -: Anlagefläche
- 8 -: Schaft
- 9 -: Ende
- 10 -: Schaftabschnitt
- 11 -: Durchmesser
- 12 -: Gewindeabschnitt
- 13 -: Kerndurchmesser
- 14 -: Außendurchmesser
- 15 -: Gewindeauslauf
- 16 -: Länge
- 17 -: Länge
- 18 -: Hülldurchmesser
- 19 -: Länge
- 20 -: Anstieg
- 21 -: Hülse
- 22 -: Achse
- 23 -: Innendurchmesser
- 24 -: Flansch
- 25 -: Flansch
- 26 -: Länge
- 27 -: Engstelle
- 28 -: Durchmesser
- 29 -: Einprägung
- 30 -: Gewindeauslauf
- 31 -: Hüllkegel
- 32 -: Rolldurchmesser
- 33 -: Durchmesser
- 34 -: Durchmesser
- 35 -: Maß
- 36 -: Linie
- 37 -: Linie
- 38 -: Linie
- 39 -: Linie
- 40 -: Wulst
- 41 -: Unterlegscheibe
- 42 -: Innendurchmesser

## Patentansprüche

1. Verbindungselement (1) mit einer Schraube (2) und einem daran unverlierbar und in der Regel drehbar angeordneten Stützelement (3), wie Hülse, Unterlegscheibe od. dgl., wobei die Schraube (2) einen Kopf (4) und einen Schaft (8), auf dem endseitig ein Gewindeabschnitt (12) mit einem kopfseitigen Gewindeauslauf (15) und kopfseitig ein Schaftabschnitt (10) mit einem gegenüber dem Außendurchmesser (14) des Gewindeabschnitts (15) reduziertem Durchmesser (11) angeordnet sind, und das Stützelement (3) eine Engstelle (27) mit kleinerem Durchmesser (28) als der Außendurchmesser (14) des Gewindeabschnitts (12) aufweist, **dadurch gekennzeichnet, dass** der kopfseitige Gewindeauslauf (15) zumindest teilweise über seine axiale Erstreckung und zumindest über einen wesentlichen Teil seines Umfangs entfernt ist, so dass ein sprung- oder stufenartiger Anstieg (20) zumindest etwa auf den Außendurchmesser (14) des Gewindeabschnitts (12) resultiert.

2. Verbindungselement nach Anspruch 1, **dadurch gekennzeichnet, dass** die Schraube (2) im Bereich des entfernten kopfseitigen Gewindeauslaufs (15) einen axial zylindrisch verlaufenden Hülldurchmesser (18) aufweist.

3. Verbindungselement nach Anspruch 2, **dadurch gekennzeichnet, dass** der Hülldurchmesser (18) kleiner als der Durchmesser (28) der Engstelle (27) ausgebildet ist.

4. Verbindungselement nach Anspruch 3, **dadurch gekennzeichnet, dass** der Hülldurchmesser (18) größer, insbesondere nur geringfügig größer, als der reduzierte Durchmesser (11) des Schaftabschnitts (10) ausgebildet ist.

5. Verbindungselement nach Anspruch 1, **dadurch gekennzeichnet, dass** an der Schraube (2) der sprung- oder stufenartige Anstieg (20) des Hülldurchmessers (18) im Bereich des entfernten kopfseitigen Gewindeauslaufs (15) auf den Außendurchmesser (14) des Gewindeabschnitts (12) auf weniger als 180°, insbesondere etwa 90°, des Umfangs verlaufend angeordnet ist.

6. Verbindungselement nach Anspruch 1, **dadurch gekennzeichnet, dass** der kopfseitige Gewindeauslauf (15) des Gewindeabschnitts (12) der Schraube (2) spanend oder spanlos entfernt ist.

7. Verbindungselement nach einem der Ansprüche 1 bis 6, **dadurch gekennzeichnet, dass** die Schraube (2) im Bereich des entfernten kopfseitigen Gewindeauslaufs (15) eine durch Walzen gebildete umlaufende Wulst aufweist.

8. Verbindungselement nach einem der Ansprüche 1 bis 7, **dadurch gekennzeichnet, dass** das als Hülse (21) ausgebildete Stützelement (3) einen Innendurchmesser (23) aufweist, der größer als der Außendurchmesser (14) des Gewindeabschnitts (12) ausgebildet ist und dass an der Hülse (21) mehr örtliche Einprägungen (29) über den Umfang verteilt vorgesehen sind als es der Gangzahl des Gewindes entspricht.

9. Verbindungselement nach einem der Ansprüche 1 bis 7, **dadurch gekennzeichnet, dass** das als Unterlegscheibe (41) ausgebildete Stützelement (3) einen Innendurchmesser (42) aufweist, der kleiner als der Außendurchmesser (14) des Gewindeabschnitts (12) ausgebildet ist und die Engstelle (27) bildet.

10. Verbindungselement nach Anspruch 1, **dadurch gekennzeichnet, dass** der sprung- oder stufenartiger Anstieg (20) des Hülldurchmessers (18) auf den Außendurchmesser (14) des Gewindeabschnitts (12) im Bereich des Gewindeabschnitts (12) angeordnet ist.

## Claims

1. A connecting element (1), comprising a screw (2) and a supporting element (3), for example a bush, a plain washer or the like, the supporting element being captively connected to and in general rotatably arranged on the screw (2), the screw (2) including a head (4) and a shank (8), the shank (8) having a threaded portion (12) including a thread runout (15) facing the head and a shank portion (10), the shank portion (10) having a diameter (11) which is less than the outer diameter (14) of the threaded portion (12), the supporting element (3) including a narrowing location (27) having a diameter (28) which is less than the outer diameter (14) of the threaded portion (12), **characterized in that** the thread runout (15) facing the head (4) is removed with respect at least over a part of the axial extension and at least over a substantial part of the circumference resulting in a step-like or stop element (20) ending at least about the outer diameter (14) of the threaded portion (12).

2. Connecting element of claim 1, **characterized in that** the screw (2) in the region of the removed thread runout (15) has a surrounding diameter (18) which has an approximately cylindrical shape in an axial direction.

3. Connecting element of claim 2, **characterized in that** the surrounding diameter (18) is less than the diameter (28) of the narrowing location (27).

4. Connecting element of claim 3, **characterized in that** the surrounding diameter (18) is more, especially only slightly more, than the reduced diameter (11) of the shank portion (10).

5. Connecting element of claim 1, **characterized in that** the step-like or stop increase (20) of the surrounding diameter (18) to the outer diameter (14) of the threaded portion (12) of the screw (2) in the region of the runout (15) facing the head is designed and arranged to cover less than approximately 180°, especially less than about 90°, of the circumference.

6. Connecting element of claim 1, **characterized in that** the thread runout (15) of the threaded portion (12) of the screw (2) facing the head is produced by removing material or without removing material.

7. Connecting element of one of the claims 1 to 6, **characterized in that** the screw (2) in the region of the removed thread runout (15) facing the head includes an enlarged element being produced by rolling.

8. Connecting element of one of the claims 1 to 7, **characterized in that** the supporting element (3) is designed as a bush (21) having an inner diameter (23) which is more than the outer diameter (14) of the threaded portion (12), and **in that** the bush (21) includes a plurality of impressions (29) being spaced apart about the circumference, wherein the number of the impressions is more than the number of the convolutions of the thread.

9. Connecting element of one of the claims 1 to 7, **characterized in that** the supporting element (3) is designed as a plain washer (41) having an inner diameter (42) which is less than the outer diameter (14) of the threaded portion (12), the inner diameter (42) forming the narrowing location (27).

10. Connecting element of claim 1, **characterized in that** the step-like or stop increase (20) of the surrounding diameter (18) to the outer diameter (14) of the threaded portion (12) of the screw (2) is arranged in the region of the threaded portion (12).

## Revendications

1. Elément de liaison (1) avec une vis (2) et un élément d'appui (3) disposé imperdable sur celle-ci et en règle générale tournant, tel que douille, rondelle ou similaire, la vis (2) comportant une tête (4) et une tige (8) sur laquelle sont disposées , côté extrémité, une section filetée (12) avec un filet incomplet (15) côté tête, et, côté tête, une section de tige (10) avec un diamètre (11) réduit par rapport au diamètre extérieur (14) de la section filetée (12), et l'élément d'appui (3) comporte un point de rétrécissement (27) de plus petit diamètre (28) que le diamètre extérieur (14) de la section filetée (12), **caractérisé en ce que** le filet incomplet (15) côté tête est supprimé au moins en partie sur son étendue axiale et au moins sur une partie essentielle de son pourtour, de sorte qu'il en résulte un accroissement (20), de type saut ou gradin, au moins au diamètre extérieur (14) de la section filetée (12).

2. Elément de liaison selon la revendication 1, **caractérisé en ce que** dans la zone du filet incomplet (15) supprimé côté tête, la vis présente un diamètre d'enveloppe (18) s'étendant cylindriquement axialement.

3. Elément de liaison selon la revendication 2, **caractérisé en ce que** le diamètre d'enveloppe (18) est réalisé plus petit que le diamètre (28) du point de rétrécissement (27).

4. Elément de liaison selon la revendication 3, **caractérisé en ce que** le diamètre d'enveloppe (18) est réalisé plus grand, en particulier légèrement plus grand seulement, que le diamètre réduit (11) de la section de tige (10).

5. Elément de liaison selon la revendication 1, **caractérisé en ce que** sur la vis (2), l'accroissement (20), de type saut ou gradin, du diamètre d'enveloppe (18), dans la zone du filet incomplet (15) supprimé côté tête, au diamètre extérieur (14) de la section filetée (12), est disposé de manière à s'étendre sur moins de 180°, en particulier sur environ 90°, de la circonférence.

6. Elément de liaison selon la revendication 1, **caractérisé en ce que** le filet incomplet (15) côté tête de la section filetée (12) de la vis (2) est supprimé avec ou sans enlèvement de copeaux.

7. Elément de liaison selon l'une des revendications 1 à 6, **caractérisé en ce que** la vis (2) présente, dans la zone du filet incomplet (15) supprimé côté tête, un bourrelet périphérique formé par laminage.

8. Elément de liaison selon l'une des revendications 1 à 7, **caractérisé en ce que** l'élément d'appui (3), réalisé comme douille (21), présente un diamètre intérieur (23) qui est réalisé plus grand que le diamètre intérieur (14) de la section filetée (12), et **en ce que** sur la douille (21) sont prévues des empreintes (29) locales réparties sur le pourtour dans un nombre supérieur au nombre de filets de la tige filetée.

9. Elément de liaison selon l'une des revendications 1 à 7, **caractérisé en ce que** l'élément d'appui (3), réalisé comme rondelle (41), présente un diamètre intérieur (42) qui est inférieur au diamètre extérieur (14) de la section filetée (12), et qui forme le point de rétrécissement (27).

10. Elément de liaison selon la revendication 1, **caractérisé en ce que** l'accroissement (20) de type saut ou gradin du diamètre d'enveloppe (18) au diamètre extérieur (14) de la section filetée (12), est disposé dans la zone de la section filetée (12).
